# EUROPEAN PATENT APPLICATION

(11) **EP 2 315 417 A1**
(43) Date of publication of application: **27.04.2011**
(21) Application number: 09013409.9
(22) Date of filing: 23.10.2009
(51) Int. Cl.: H04L 29/12

(54) **Method, electronic device and system for data access**

(71) Applicant: Deutsche Telekom AG, 53113 Bonn (DE); Technische Universität Berlin, 10623 Berlin (DE)
(72) Inventor: Sundaram, Shiva, D-10119 Berlin (DE)
(74) Representative: Kampfenkel, Klaus

(57) **Abstract**

As a new and improved way for accessing different types of data items such as a webpage, a playlist, a TV program or a product identification the invention proposes a method for data access comprising the steps of providing a sequence of digits (175, 730) via an input device (150, 160) for selecting a data item to be accessed, determining an access information item (710) for accessing the selected data item depending on the input sequence of digits (175, 730) using a lookup table (414, 242, 700) with at least one entry, wherein each entry comprises an access information item (710) for accessing a data item and a corresponding sequence of digits (730), and accessing the selected data item using the determined access information item.

The invention further proposes an electronic device and a system for performing such a method.

## Description

### Field of the invention

The invention generally relates to data access, and in particular to a method and a device for accessing data items using access information such as for instance an Internet link.

### Background of the invention

Today a vast number of texts, audio and video documents are available and indexed in the Internet. Many of these documents reside on remote servers that are available to the end user at the click of a link or by entering the appropriate web address in a graphical interface such as a browser. In addition to this, direct feeds such as IPTV and streaming media networks are also available to present multimedia documents such as movies, songs or radio programs to the end user either by a link or by navigating through menu-driven graphical user interfaces which are implemented in devices such as a television set-top box. In cloud computing technologies more and more public and private documents are centrally located in high-performance servers and accessed on low-performance terminals by the end user over medium to high-speed computer networks. This form of document access is also commonly used in social networks, where a group of people known to each other are connected by websites and where they are collectively able to upload, download, share and tag documents such as text, images, audio clips or video clips. For instance in US 6 314 425 B1 an Internet-based document management system is described for managing electronic documents over open networks, such as the Internet, to permit users to store, retrieve and collaboratively manipulate files, wherein the server which is programmed to provide the services of the document management system is also programmed to generate access tokens, derived from random numbers independent of user or resource information, and these tokens are used to limit a user's access to the services provided by the document management system.

User-generated content further contributes to the ever increasing number of documents in the Internet. A way of filtering the documents available in the Internet is for instance described in US 6 178 419 B1, proposing a method of automatically creating a database on the basis of a set of category headings which uses a set of keywords provided for each category heading, wherein the keywords are used by a processing platform to define searches to be carried out on a plurality of search engines connected to the processing platform via the Internet, the search results are processed by the processing platform to identify the URLs embedded in the search results, the URLs are then used to retrieve the pages to which they refer from remote data sources in the Internet, the processing platform then filters and scores the pages to determine which pages are the most relevant to the original categories, and Internet location information for the most relevant pages is stored in the database.

Internet access and related functions like e-mail are increasingly available also on mobile devices. Such devices however typically are provided only with limited processing and memory capacity. From US 2006/02930781 A1 in this respect a document access method for accessing a document which is linked to a message is known, wherein an operator sends a message linked to a document to a mobile terminal, where the user consults the message with the document size being displayed and commands the operator to associate with the document the address of a second terminal having a greater capacity than the mobile terminal, thereby enabling the operator to send the document to the second terminal.

Document sharing on open networks such as the Internet is so prevalent that even conventional media such as newspapers frequently print website links with their articles so as to complement the information on paper with web-based information. However, to allow efficient access to the tremendous number of documents, internet links typically are generated automatically by back-end software which are typically used by server-side software to serve the document content to a user. Due to the automatic generation procedure many of these links generally are not easily human-readable, not easy to memorize and in many cases difficult to manually enter in a browser.

For sharing such a web link, a commonly used solution is to transfer it either by email, a chat client or a web-client for the other party to access using copy and paste. This works well for most web-based communication methods, where the process of copy-pasting and later on clicking simplifies sharing links to documents. However, it fails in a simple scenario, where the user learns about the document from a non-computer related source, such as a magazine, a public poster, TV or radio advertisement. A partial solution to overcome this problem is to create easily human-readable and memorizable web links, such as for instance "www.mywebpage.com/mylink" (www.tinyurl.com provides such a service). However, when visual presentation is not possible, for instance when the link is shared via radio or telephone, the alternative is to verbally spell each character, which is inherently error prone and tedious. This is especially true when the links are not present in an easily human-readable form or not intuitive.

In another scenario that is unrelated to the Internet a typical approach to advertise for a specific television or radio event, a soccer game, a concert or a news item is to specify the television or radio channel by indicating the channel number or transmission frequency and the exact broadcasting time slot. When using a set-top-box, to access this content, a user typically has to go through a reasonably long process of traversing through menu items and lists in a graphical user interface that is running in the television set-top-box. Such a procedure is even more tedious for special content such as Pay-Per-View or video-on-demand programming, as the user usually needs to go deeper into the menu.

Today small-form factor devices such as a mobile phone or a PDA often are capable of accessing the Internet. However, retrieving Internet content or other documents typically is not easy, since directly entering website addresses on a mobile phone is difficult and time consuming because of the limited keypad and a small-size screen.

It is therefore an object of the present invention to show a new and improved way of data access, in particular when using a mobile electronic device for accessing the data items.

### Summary of the Invention

The inventive solution of the object is achieved by each of the subject matter of the respective attached independent claims. Advantageous and/or preferred embodiments or refinements are the subject matter of the respective attached dependent claims.

Accordingly, an inventive method for data access comprises the step of providing a sequence of digits via an input device for selecting a data item to be accessed. Depending on the input sequence of digits an access information item for accessing the selected data item is determined, wherein for this purpose a lookup table is used. The lookup table comprises at least one entry, wherein preferably for each data item which can be accessed one entry is provided. Each entry comprises an access information item for accessing the respective data item and a corresponding sequence of digits, wherein preferably the access information item has a larger data size than the corresponding sequence of digits. The selected data item is then accessed by using the determined access information item.

The general idea of the invention is to enable easy access to data items for which typically only complicated access information is provided, wherein the access information for instance is an automatically generated Internet link or the combination of a broadcasting channel and a broadcasting time slot. The invention allows access to such data items by simply entering a sequence of digits via an input device, wherein the sequence of digits preferably is shorter and/or easier to memorize than the corresponding access information item.

In a preferred embodiment at least one entry of the lookup table is generated automatically, wherein the sequence of digits of said entry is calculated from the corresponding access information item using a hash function. A hash function is a mathematical function which converts a large, possibly variable-sized amount of data into a small datum, usually a single integer. The values returned by a hash function are called hash values, hash codes, hash sums, or simply hashes and typically can be expressed by a sequence of digits.

Since in this embodiment an entry of the lookup table is generated by providing the access information of a data item and calculating from this the corresponding sequence of digits, while for the data access the access information is determined from a sequence of digits which is entered via an input device, the lookup table most preferably provides a one-on-one mapping of access information item to corresponding sequence of digits.

Although a hash function may map two or more keys to the same hash value, a hash function typically is constructed in such a way that the occurrence of such collisions is minimized. The issue of collisions may be met by any known heuristic method. A simple method of avoiding collisions is to check when a new entry is to be added to the lookup table whether an entry with the same sequence of digits of the new entry already exists in the lookup table and if that should be the case to append the sequence of digits of the new entry by an additional digit, wherein for further collisions this additional digit may be incremented.

In a further preferred embodiment at least one entry of the lookup table is generated on the basis of user input. This is of advantage, since a user may select a sequence of digits that can be easily memorized.

In a further preferred embodiment access to the selected data item is provided via a communications network, wherein said communications network in particular is the Internet or a television broadcasting network. Accordingly the data items in this embodiment for instance are documents located in the Internet or TV programs provided by a television programming provider for set-top-box users. In this embodiment preferably the lookup table is stored in a server connected to said communications network.

However, with advantage the lookup table and/or the data items may also be stored in a user device like an audio player, wherein the data items for instance are playlists of audio files stored in the audio player.

The input device for the input of the sequence of digits preferably is adapted for manual input, such as a keypad of a mobile phone or of an audio player. However, the step of providing the sequence of digits may also advantageously comprise determining the sequence of digits by means of speech recognition. Thereby data access is enabled also in situations, in which a user is unable to enter data manually, for instance when driving a car.

The inventive method may be employed for accessing various different kinds of data items. Accordingly, the step of accessing the selected data item preferably comprises the step of accessing a document via the Internet, accessing a multimedia file, selecting a TV channel and a broadcasting time of a TV program, and/or selecting a product to be purchased.

An inventive electronic device is adapted to perform the above described method and for this purpose comprises an input means adapted for numeric input, a first storage means in which at least one data item is stored, a second storage means in which a lookup table with at least one entry is stored, wherein each entry comprises an access information item for accessing a data item and a corresponding sequence of digits, and a control means adapted to determine from the lookup table an access information item which corresponds to a sequence of digits input via said input means, and to access the respective data item using the determined access information item. The electronic device preferably is a mobile electronic device, such as a mobile phone or an audio player.

An inventive system for data access, which is adapted to perform a method as described above, comprises at least one data source in which at least one data item is stored, a user device having input means which is adapted for numeric input, and a retrieval device in which a lookup table with at least one entry is stored, wherein each entry comprises an access information item for accessing a data item and a corresponding sequence of digits, wherein the user device is adapted to transmit an input sequence of digits to the retrieval device, and the retrieval device is adapted to determine from the lookup table the access information item which corresponds to the sequence of digits received from the user device, and to provide to the user device access to the respective data item using the determined access information item. Preferably the user device and the retrieval device are connected via a communications network.

The electronic device and the system preferably are adapted for performing any one of the above described preferred embodiments of the inventive method.

### Brief Description of the Figures

It is shown in
- Fig. 1: schematically the general concept of a preferred embodiment of the inventive method,
- Fig. 2: schematically a preferred embodiment of an inventive system for data access,
- Fig. 3: schematically a preferred embodiment of an inventive electronic device,
- Fig. 4: schematically a further preferred embodiment of an inventive system for data access,
- Fig. 5: schematically a lookup table with entries for different kinds of data items.

### Detailed Description of the Invention

Subsequently, preferred but exemplar embodiments of the invention are described in more detail with regard to the figures. Same reference numbers indicate same or similar components.

In a preferred embodiment the inventive method uses numeric entries which are input via an input interface to access new and existing documents, wherein a document or a set of documents can be accessed either by simply entering a sequence of numeric digits on a numeric-key pad interface or by speaking the sequence of numeric digits using a speech recognizer. For example, to access a particular video clip in the Internet a user simply enters a sequence of digits in a numeric keypad of the interface or speaks the sequence of digits and a browser or accordingly adapted software accesses the document for the user. For instance, to access the video clip having the Internet link "http://www.youtube.com/watch?v=8nTFjVm9sTQ" the user simply enters a sequence of numeric digits such as "11991" in the numeric key-pad interface or speaks the sequence of numbers. The sequence of digits may also have a format which resembles a phone number like sequence, like for instance "1-801-1991", since most people are used to memorize phone numbers.

With special advantage the inventive numeric entry to access links to documents on the Internet can be used to advertise websites on non-computer related media such as the radio or television or print media such as newspapers and magazines. In contrast to existing menu-driven approaches the invention presents a short, one-step method to access a remote document and/or a list of documents.

When using a personal computer for data access with advantage accordingly adapted client software is utilized as input interface for numeric entry. Alternatively, the input interface can also be integrated in a webpage, wherein for instance a key-pad like interface is presented on the webpage, so that the user simply accesses the webpage using a standard web browser and on entering the specific sequence of numeric digits, the browser is redirected to the specific content. In this embodiment also a speech interface may be used.

In another embodiment special content on a television set-top-box or a radio is accessed, wherein the user accesses the locally recorded or live programming directly by simply entering or speaking a sequence of digits on a remote control or an accompanying device capable of accepting numeric entries.

In small-form factor devices such as a mobile phone, a numeric keypad always exists. Therefore for a user to access any specific content, he or she simply enters the sequence of digits to access the content. Data access is thereby greatly simplified for users of mobile devices.

The possibility to also enter the sequence of digits by speech is especially advantageous in situations where it is not possible for the user to directly access a manual interface, for example while driving a vehicle, as a user can access a list of documents, for example a playlist of songs on a personal music player, by simply uttering or entering a sequence of numbers.

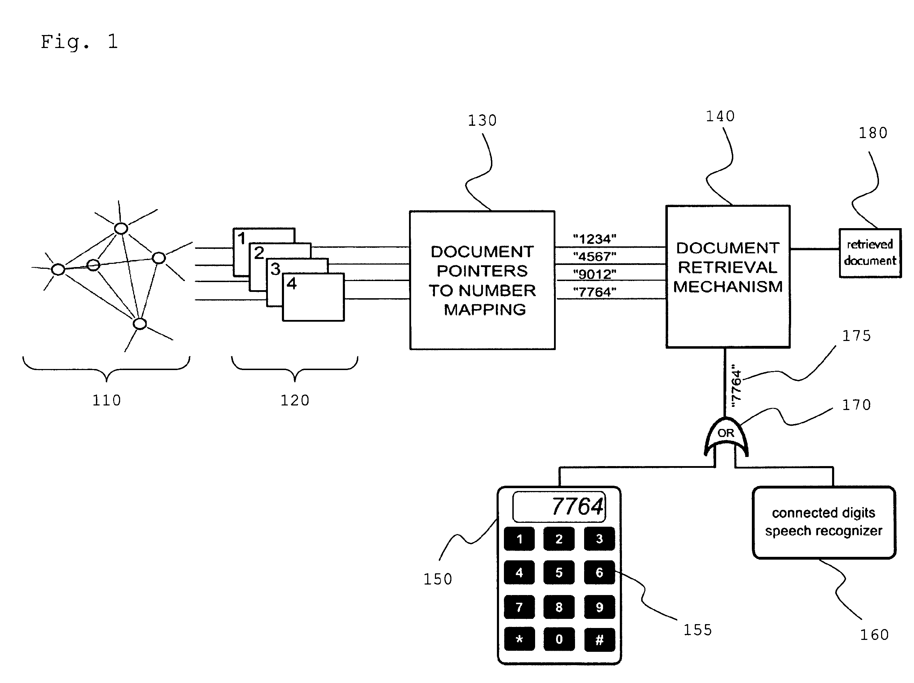

In Fig. 1 the inventive concept is shown for a preferred embodiment of the inventive method. In the shown embodiment a computer network 110 such as the Internet is provided for document access. The network 100 can also be a network that provides television or radio programming to electronic appliances such as a television or a radio. The accessible documents 120, or playlists of documents, either exist locally on a user terminal or on computer servers that are connected via a computer network to which the user terminal is also connected. A mapping mechanism 130 is implemented that maps each document to a numeric sequence and this mapping is stored in a lookup table. A user may manually create this table or use software that automatically hashes the link or pointer to the document to fixed or variable number sequences. This is a one-to-one mapping. Any existing hash function, exact or approximate, may be used to map each link or pointer to a sequence of human-readable numbers. In "http://en.wikipedia.org/wiki/Hash_function" for instance a general description of hash functions is given. A suitable hash algorithm is also described in "Near optimal hashing algorithms for approximate nearest neighbor in high-dimensional space" by Alexander Adoni and Piotr Indyk, in Communications of the ACM Vol 51 no.1 2008 pp 117-112.

This results in a table where every sequence of digits corresponds to a unique document. This table is stored in a universal location where the mapping mechanism 130 and a document retrieval mechanism 140 have access to it. This table or each entry can be transmitted or shared in a variety of ways. Either it can be stored securely in a remote server for an authorized user to access it or parts of it may be shared amongst users for shared access. Additionally, a single entry may also be shared over public broadcast as a part of an advertisement to provide users to easily memorize and use links to documents on the Internet.

The implemented document retrieval mechanism 140 matches an entered sequence of numbers with the actual links or pointers to the relevant document by searching through the lookup table. The sequence of numbers is entered by using interfaces such as a manual input device 150 with a numeric keypad 155 or a speech recognizer 160. The numeric-keypad interface 150 may be realized as an actual physical device or it may be a software-based graphical user interface. A previously known number entry in the lookup table is entered as a sequence of numbers 175. This is subsequently transmitted to the document retrieval mechanism 140 either locally or over a computer network. It may also be a part of a "order-by-phone" system, where the sequence of digits 175 is entered after connecting to a remote ordering device.

The numeric-keypad interface 150 can be provided as a stand-alone device or as a part of an existing device such as a mobile phone or a TV remote control. Further, the numeric-keypad interface 150 may be used in conjunction with a digit speech recognizer 160, wherein a control mechanism 170 is utilized for choosing the appropriate mode of input. Preferably the control mechanism 170 is operated manually, so that the user may decide which mode of input shall be activated. The control mechanism 170 can either be a physical switch, for example a "push to talk" mechanism, or a software-based control mechanism that can be a part of a graphical-user interface. The speech recognizer 160 is a speech interface that can recognize a sequence of numbers and can also be provided as a stand-alone device or as a part of an existing device such as a mobile phone or a TV remote control.

The document 180 corresponding to the entered number is presented to the user via a familiar mechanism such as an Internet browser or other document-viewing interface either directly on the interface device or on a remote device such as a television or radio.

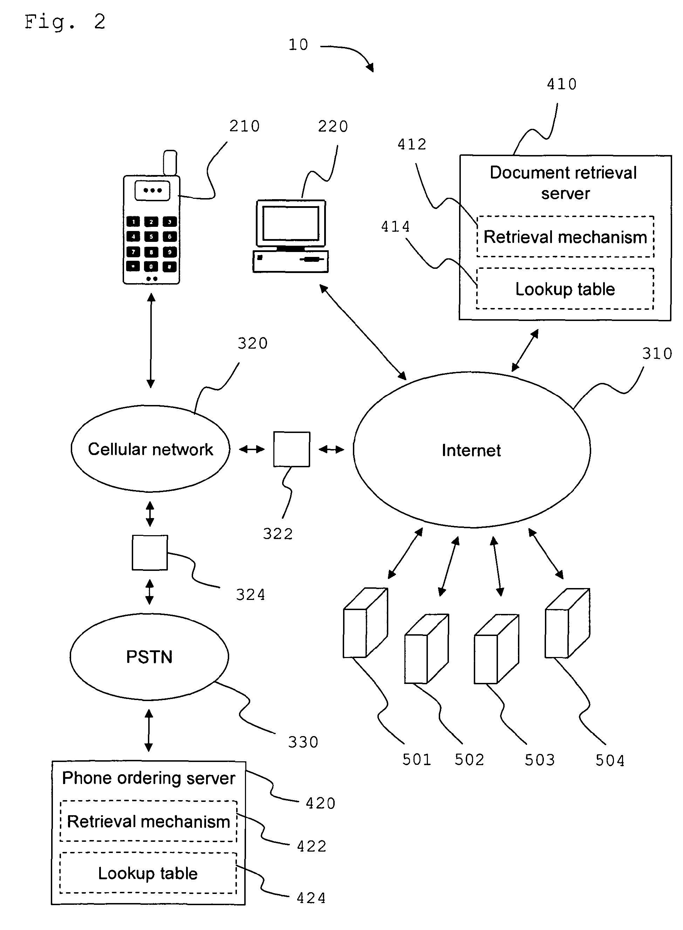

In Fig. 2 a preferred embodiment of a system for data access is shown. The system shown in Fig. 2 is exemplary and comprises components for different application scenarios. Accordingly, an inventive system does not need to comprise all the components shown in Fig. 2.

In the shown embodiment four exemplary document servers 501-504 are provided which are connected to the Internet 310 and in which documents are stored, wherein the documents may be any kind of document such as a HTML document, an image, a video clip or an audio clip. These documents can be accessed by each of the exemplary shown user devices 210 and 220 via the Internet 310. The user device 210 is provided as a mobile phone having as input device a keypad for numeric input, wherein access to the Internet 310 is provided via a cellular network 320 to which the mobile phone 210 is connectable and a gateway 322 which connects the cellular network 320 to the Internet 310. The user device 220 is provided as a personal computer which is directly connected to the Internet 310 and which may for instance be provided with an input device in the form of a graphical interface adapted for numerical input.

The access information for accessing a selected document is determined by a document retrieval server 410 which is programmed to perform a retrieval mechanism 412 using a lookup table 414, wherein each entry of the lookup table 414 comprises an access information item for accessing a document, i.e. an Internet link, and a corresponding sequence of digits.

When a user enters a sequence of digits in one of the user devices 210 or 220, this sequence of digits is transmitted to the document retrieval server 410 which automatically determines from the lookup table 414 the access information item which corresponds to the sequence of digits received from the respective user device, and provides to the user device the respective Internet link. The user device 210 or 220 then can use the determined Internet link to access the document which was selected by entering the sequence of digits and can present the content to the user.

Further shown in Fig. 2 is a phone ordering server 420 which comprises a retrieval mechanism 422 and a lookup table 424. From the mobile phone 210 a connection can be established to the phone ordering server 420 via the cellular network 320 and the PSTN (Public Switched Telephone Network) 330, wherein the cellular network 320 and the PSTN 330 are connected by a suitable gateway 324. Having established a connection between the mobile phone 210 and the phone ordering server 420, for instance a product item may be selected or ordered by entering a sequence of digits using the keypad of the mobile phone 210 as input device, which is then transmitted to the phone ordering server 420, where a product identification is determined depending on the entered sequence of digits using the lookup table 424, wherein in the lookup table 424 product identifications are mapped to corresponding sequences of digits. The entered sequence of digits preferably is shorter and easier to memorize than the corresponding product identification.

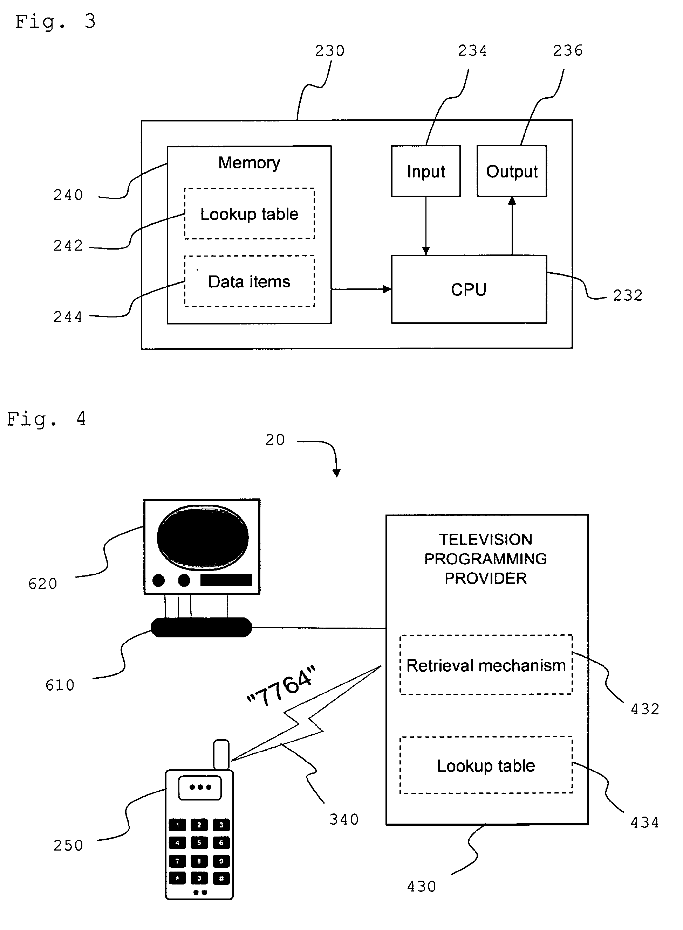

Fig. 3 shows a preferred embodiment of an inventive electronic device 230 which is adapted to perform the inventive method, wherein the electronic device 230 is a mobile device like for instance an audio player. The device 230 is provided with at least one input device 234 which can for instance be provided as a keypad adapted for numeric input or as a microphone and a speech recognition software adapted to recognize a spoken sequence of digits. The device 230 is further provided with at least one output which can for instance be provided as an audio output like a loudspeaker or a headphone connector. In a memory 240 of device 230 data items 244 are stored which may for instance be audio files in MP3 or any other suitable format. Further stored in memory 240 is a lookup table 242 with at least one entry, wherein each entry comprises an access information item for accessing at least one of the stored data items 244 and a corresponding sequence of digits. The access information item may either be a link to a data item such as an audio file or it may be a playlist for accessing several such data items. The CPU 232 is adapted to determine from the lookup table 242 an access information item which corresponds to a sequence of digits input via input means 234, and to access the respective data item using the determined access information item.

In Fig. 4 a further preferred embodiment of an inventive system 20 is shown, wherein the input device is part of a user device which is provided as a mobile phone 250. In this embodiment the retrieval mechanism 432 and the lookup table 434 which are provided at a television programming provider 430, for instance residing in an accordingly adapted server, may be accessed by dialing a previously known telephone number on the mobile phone 250, thereby establishing a connection 340 to the television programming provider 430, wherein the connection may be established in a similar way as described above for the phone ordering server 420. The sequence of numbers is subsequently entered by utilizing the touch-tone keypad entry mechanism. Finally, the data item in the form of a TV program or a radio program is presented in the required format on a device such as a television or a radio. In the shown embodiment a set-top-box 610 is provided which is connected to a television set 620. In response to entering the sequence of digits the retrieval mechanism 432 determines the corresponding access information item using the lookup table 434. In the shown embodiment the determined access information item is either used to directly access a content, such as for instance a pay-per-view content, which is then transmitted to the set-top-box 610 or the access information item comprises information such as a TV or radio channel and a broadcasting time slot which is transmitted as a parameter set to the set-top-box 610 enabling it to receive the respective TV or radio program.

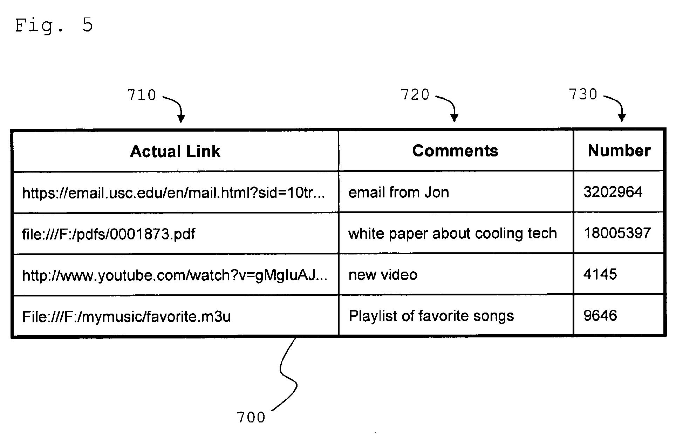

In Fig. 5 an exemplary depiction of a lookup table 700 is given, wherein access information items or pointers 710 to various data items are listed under the column "Actual Link". For each pointer 710 to a data item an optional comment 720 is provided in the shown embodiment. Unique numbers 730 corresponding to the respective pointers 710 are listed in the column "Number". These variable length numeric entries can be automatically generated or manually entered for the user's reference. The lookup table 700 preferably is stored in a location that is universally accessible in order to enable generating new entries and to also enable access by the respective retrieval mechanism. The shown entries of the lookup table 700 comprise access information items for accessing different kinds of data items, such as an email in the first entry, a locally stored PDF document in the second entry, a video clip located in the Internet in the third entry and a playlist of typically locally stored audio files in the last entry. The shown entries are exemplary only. Depending on the application for which the invention is employed each entry of the lookup table 700 may also comprise access information items to data items of the same kind.

## Claims

1. A method for data access comprising the steps of
- providing a sequence of digits (175, 730) via an input device (150, 160) for selecting a data item to be accessed,
- determining an access information item (710) for accessing the selected data item depending on the input sequence of digits (175, 730) using a lookup table (414, 242, 700) with at least one entry, wherein each entry comprises an access information item (710) for accessing a data item and a corresponding sequence of digits (730), and
- accessing the selected data item using the determined access information item.

2. The method of claim 1, wherein in each entry of the lookup table (414, 242, 700) the access information item has a larger data size than the corresponding sequence of digits.

3. The method of claim 1 or 2, wherein at least one entry of the lookup table (414, 242, 700) is generated automatically, wherein the sequence of digits of said entry is calculated from the corresponding access information item using a hash function.

4. The method of any one of the preceding claims, wherein at least one entry of the lookup table (414, 242, 700) is generated on the basis of user input.

5. The method of any one of the preceding claims, wherein access to the selected data item is provided via a communications network, wherein said communications network in particular is the Internet or a television broadcasting network.

6. The method of claim 5, wherein the lookup table is stored in a server connected to said communications network.

7. The method of any one of claims 1 to 4, wherein the lookup table is stored in a user device.

8. The method of any one of the preceding claims, wherein the step of providing the sequence of digits comprises determining the sequence of digits by means of speech recognition.

9. The method of any one of the preceding claims, wherein the step of accessing the selected data item comprises the step of
- accessing a document via the Internet,
- accessing a multimedia file,
- selecting a TV channel and a broadcasting time of a TV program, and/or
- selecting a product to be purchased.

10. An electronic device (230), in particular a mobile electronic device, adapted to perform a method according to one of claims 1 to 9, comprising
- an input means (234) adapted for numeric input,
- storage means for storing at least one data item and a lookup table (414, 242, 700) with at least one entry, wherein each entry comprises an access information item (710) for accessing a data item and a corresponding sequence of digits (730), and
- a control means adapted to determine from the lookup table an access information item which corresponds to a sequence of digits input via said input means, and to access the respective data item using the determined access information item.

11. A system (10) for data access, adapted to perform a method according to one of claims 1 to 9, comprising
- at least one data source in which at least one data item is stored,
- a user device (210, 220) having input means which is adapted for numeric input, and
- a retrieval device (410, 420, 430) in which a lookup table with at least one entry is stored, wherein each entry comprises an access information item (710) for accessing a data item and a corresponding sequence of digits (730), wherein
- the user device is adapted to transmit an input sequence of digits to the retrieval device, and
- the retrieval device is adapted to determine from the lookup table the access information item which corresponds to the sequence of digits received from the user device, and to provide to the user device access to the respective data item using the determined access information item.

12. The system of claim 11, wherein the user device and the retrieval device are connected via a communications network.
